## Europäisches Patentamt

## European Patent Office

## Office européen des brevets

(19)

(11) Veröffentlichungsnummer: **0 011 079**
**B1**

(12) **EUROPÄISCHE PATENTSCHRIFT**

(45) Veröffentlichungstag der Patentschrift:
**12.08.81**

(51) Int. Cl.³: **F 16 F 15/02, F 02 B 77/13**

(21) Anmeldenummer: **79101140.6**

(22) Anmeldetag: **12.04.79**

(54) Maschinengehäuse mit einem eine relativ geringe Wandstärke aufweisenden Bauteil.

(30) Priorität: **08.11.78 DE 2848503**

(43) Veröffentlichungstag der Anmeldung:
**28.05.80 Patentblatt 80/11**

(45) Bekanntmachung des Hinweises auf die Patenterteilung:
**12.08.81 Patentblatt 81/32**

(84) Benannte Vertragsstaaten:
**FR GB IT SE**

(56) Entgegenhaltungen:
**CH-A-196 749**
**DE-A-2 455 865**
**FR-A-2 201 717**
**GB-A-873 544**
**US-A-3 330 519**
**US-H-T973 005**

(73) Patentinhaber: **Alcan Aluminiumwerk Nürnberg GmbH, D-6000 Frankfurt/Main (DE)**

(72) Erfinder: **Rösch, Fritz, Dipl.Ing., Kirchenweg 4, D-8540 Schwabach (DE)**

(74) Vertreter: **Eltle, Werner, Dipl.Ing. et al, Arabellastrasse 4 Sternhaus, D-8000 München 81 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Maschinengehäuse mit einem eine relativ geringe Wandstärke aufweisenden Bauteil

Die Erfindung betrifft ein Maschinengehäuse mit einem Bauteil, das einen mindestens eine geringe Menge Flüssigkeit enthaltenden Raum zumindest teilweise umschließt, eine relativ geringe Wandstärke besitzt und in dem auf mechanische, pneumatische und/oder hydraulische Weise Schwingungen erzeugt werden.

Derartige Bauteile werden z. B. an Verbrennungsmotoren, wie z. B. als Zylinderkopfdeckel, Räderkastendeckel, Ölwannen und dgl., verwendet. In diesen Bauteilen werden auf mechanische, pneumatische und/oder hydraulische Weise durch bewegte Maschinenteile Schwingungen erzeugt, die entsprechend starke Geräusche hervorrufen. Zur Dämpfung dieser Geräusche sind bisher die verschiedensten Maßnahmen ergriffen worden.

Eine Möglichkeit besteht darin, die Bauteile mit einer relativ großen Wandstärke oder mit Einzelverstärkung an Wand oder Wänden auszuführen. Der dadurch bedingte erhöhte Materialeinsatz ist nicht nur kostspielig, sondern erhöht auch das Gewicht des Maschinengehäuses entgegen den allgemeinen Bestrebungen nach einer Leichtbauweise.

Eine weitere Möglichkeit wurde darin gesehen, die Bauteile mit Dämmstoffen, wie z. B. gummiartigen, elastischen Belägen, zu beschichten, um auf diese Weise eine Geräuschdämmung zu erzielen. Diese Dämmstoffe sind jedoch nicht nur teuer, sondern lösen sich auch im Verlauf der Betriebszeit ab, so daß damit die Geräuschdämpfung wieder abnimmt.

Demgegenüber ist es Aufgabe der Erfindung, ein Bauteil der vorausgesetzten Art für ein Maschinengehäuse zu schaffen, bei dem mit einfachen Mitteln zuverlässig ein Auftreten von unzulässig hohen Geräuschen aufgrund von Schwingungen verhindert wird.

Diese Aufgabe wird erfindungsgemäß dadurch gelöst, daß zwischen gegenüberliegenden Wandungsteilen des Bauteils und/oder einem Wandungsteil desselben und einem gegenüberliegenden Wandungsteil eines benachbarten Gehäuseteils zumindest ein Element vorgesehen ist, das sich zwischen den betreffenden Wandungsteilen unter Freilassung eines für die Flüssigkeit zugänglichen Spalts erstreckt.

Bei der erfindungsgemäßen Lösung erfolgt die Geräuschdämpfung dadurch, daß zwischen den diesbezüglichen Wandungsteilen des Schall abstrahlenden Bauteils und/oder des benachbarten Gehäuseteils sich zumindest ein Element unter Freilassung eines für die Flüssigkeit zugänglichen Spalts erstreckt. Die in den Spalt eindringende Flüssigkeit wirkt dadurch dämpfend, daß in dem Fall, in dem das Bauteil Schwingbewegungen durchführt, die Flüssigkeit wechselweise aus dem Spalt verdrängt und wieder hineingesaugt werden muß. Die hierfür nötige Energie verringert die Schwingungen und damit die Geräuschbildung. Die Spaltausbildung ist so gestaltet, daß die sich im Spalt befindende Flüssigkeit stets eine Art Kissen bilden kann, so daß ein Klappern des Bauteils aufgrund eines Anschlagens an dem benachbarten Gehäuseteil vermieden wird. Die Spaltbegrenzung kann jede beliebige Form aufweisen. Die Flächen können nämlich entweder planparallel oder labyrinthartig ausgebildet sein. Die Elemente können einfach entweder einstückig mit dem Bauteil und/oder dem benachbarten Gehäuseteil hergestellt werden, so daß die erfindungsgemäße Schalldämpfungsmaßnahme mit vertretbarem Kostenaufwand verwirklicht werden kann. Die erfindungsgemäße Anordnung kann überall da angewendet werden, wo eine Abstützung des schallabstrahlenden Bauteils gegen ein anderes Gehäuseteil möglich ist.

Die die Dämpfung bewirkende Flüssigkeit kann durch das Öl gebildet werden, das z. B. bei Verbrennungsmotoren bereits zur Schmierung oder dgl. vorhanden ist. Bei Gehäusen für andere Maschinen kann die Flüssigkeit aber auch Wasser sein. Die Flüssigkeit braucht nur eine entsprechende Viskosität besitzen, um die Schwingungsenergie der schwingenden Bauteile in der beschriebenen Weise zu reduzieren.

Eine besonders einfache fertigungstechnische Lösung besteht nach einer Ausbildung der Erfindung darin, daß das Element mit einem Wandungsteil verbunden ist und vor dem gegenüberliegenden Wandungsteil unter Bildung des Spalts endet.

Es kann aber auch zweckmäßig sein, daß gemäß einer anderen Ausführungsform der Erfindung zwei zueinander fluchtend angeordnete Elemente vorgesehen sind, die unter Bildung des Spalts aneinandergrenzen.

Eine weitere Ausbildung des Erfindungsgegenstands besteht darin, daß zumindest ein Element zur Einstellung der Weite des Spalts senkrecht zum Spaltverlauf einstellbar ist. Durch diese erfindungsgemäße Maßnahme läßt sich die Weite des Spalts z. B. in Abhängigkeit der Flüssigkeitsmenge, der Viskosität der Flüssigkeit, dem Schwingungsverhalten des Bauteils aufgrund unterschiedlicher Drehzahlbereiche der bewegten Bauteile der Maschine einstellen. Dadurch ist eine einfache Optimierung des Geräuschverhaltens des jeweiligen Bauteils möglich.

Die Einstellung des Elements läßt sich nach einem weiteren Ausführungsbeispiel des Erfindungsgegenstands dadurch einfach erzielen, daß das Element in das Wandungsteil einstellbar eingeschraubt ist. Diese Maßnahme ergibt auch eine herstellungstechnisch einfache Lösung.

Es wurde gefunden, daß es günstig ist, wenn die Weite des Spalts zwischen ca. 0,02 und 1,0 mm beträgt. Dabei hängt die Weite des Spalts ab von der angrenzenden Querschnittsfläche des Dämpfungselements, der Flüssigkeitsmenge, der Viskosität der Flüssigkeit und dgl.

Bei größerer vorhandener Flüssigkeitsmenge sind die Weite und Lage des Spalts so zu wählen, daß ausreichend Flüssigkeit in den Spalt eindringen und darin auch verbleiben kann. Bei geringeren Flüssigkeitsmengen wird es zweckmäßig sein, den Spalt als Kapillarspalt auszubilden, so daß er selbsttätig eine ausreichende Menge Flüssigkeit ansaugen kann. Es kann aber auch zweckmäßig sein, die Flüssigkeit durch besondere Maßnahmen dem Spalt zuzuführen.

Bei den angegeben Spaltweiten hat es sich als vorteilhaft erwiesen, daß nach einem weiteren Ausführungsbeispiel des Erfindungsgegenstands die den Spalt begrenzende Fläche eines Elements ca. 20 mm² im Minimum beträgt. Dabei ist bei geringerer Querschnittsfläche auch die Weite des Spalts kleiner zu wählen und umgekehrt.

Ausführungsbeispiele der erfindungsgemäßen Lösung werden anhand der beigefügten Zeichnungen erläutert. Es zeigt :

Fig. 1 in schematischer Darstellung einen erfindungsgemäß ausgebildeten Radkastendeckel z. B. bei einem Verbrennungsmotor;

Fig. 2 in schematischer Darstellung eine weitere Lösung eines erfindungsgemäß ausgebildeten Maschinengehäuses;

Fig. 3 in schematischer Darstellung eine weitere Ausführungsform eines erfindungsgemäß ausgebildeten Bauteils;

Fig. 4 eine der Anordnung nach Fig. 2 vergleichbare erfindungsgemäße Lösung, jedoch mit einstellbar ausgebildetem Element, und

Fig. 5 eine der Anordnung nach Fig. 3 vergleichbare erfindungsgemäße Lösung, jedoch mit einstellbaren Elementen.

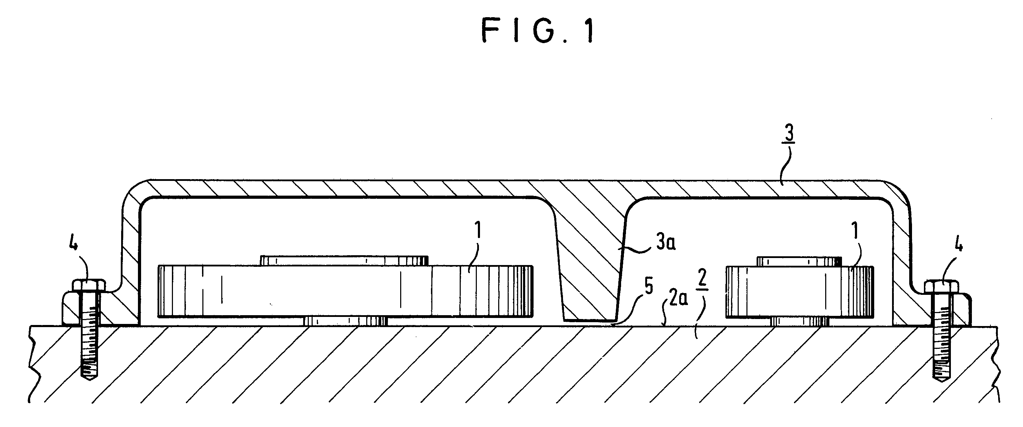

Nach Fig. 1 sind Räder 1 durch einen an dem Motorblock 2, z. B. eines Verbrennungsmotors, angeordneten Radkastendeckel 3 abgedeckt, der mittels Schrauben 4 lösbar mit dem Motorblock 2 verbunden ist. Die Räder 1 laufen bekanntlich teilweise in Öl. Der Radkastendeckel 3 weist als Dämpfungselement einen an der inneren Wandung einstückig angeformten Steg 3a auf, dessen freie Stirnfläche unter Freilassung eines Spalts 5 vor der benachbarten Wandung 2a des Motorblocks 2 endet. Dieser Spalt 5 ist für das im Radkasten befindliche Öl zugänglich. Wird der Radkastendeckel 3 in Schwingungen versetzt, so wirkt das sich im Spalt 5 befindende Öl als Dämpfer, weil das Öl wechselweise aus dem Spalt 5 herausgedrückt und danach wieder in den Spalt 5 hineingesaugt werden muß. Umfangreiche Versuche haben ergeben, daß sich aufgrund der geschilderten Maßnahme eine ausgezeichnete Schalldämpfung ergibt.

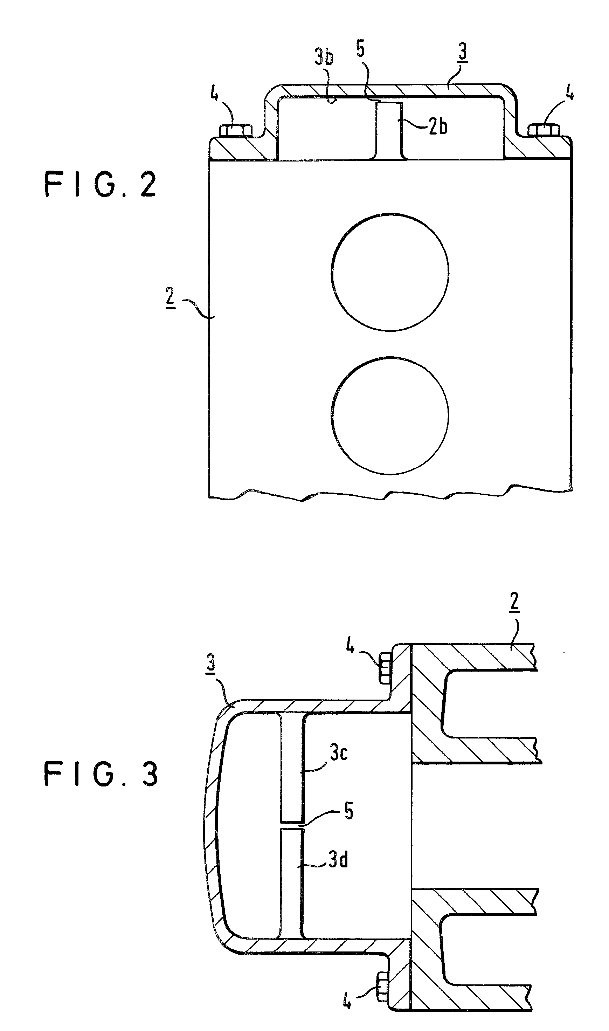

Bei der Anordnung nach Fig. 2 ist im Unterschied zu der Lösung nach Fig. 1 das Dämpfungselement 2b am Motorblock selbst angeformt, wobei sich das Dämpfungselement 2b unter Freilassung des Spalts 5 bis nahe an die diesbezügliche Wandung 3b des Radkastendeckels 3 erstreckt.

Während bei den Anordnungen nach den Fig. 1 und 2 sich das Dämpfungselement 3a bzw. 2b zwischen einer Innenwandung des Bauteils, nämlich im vorliegenden Fall des Radkastendeckels 3, und der gegenüberliegenden Wandung 2a des benachbarten Gehäuseteils, nämlich des Motorblocks 2, erstreckt, sind bei der Konstruktion nach der Fig. 3 am Bauteil 3 zwei Dämpfungselemente 3c, 3d vorgesehen, die sich zwischen zwei gegenüberliegenden Wandungsteilen des Bauteils 3 erstrecken, fluchtend zueinander angeordnet sind und unter Bildung des Spalts 5 aneinandergrenzen.

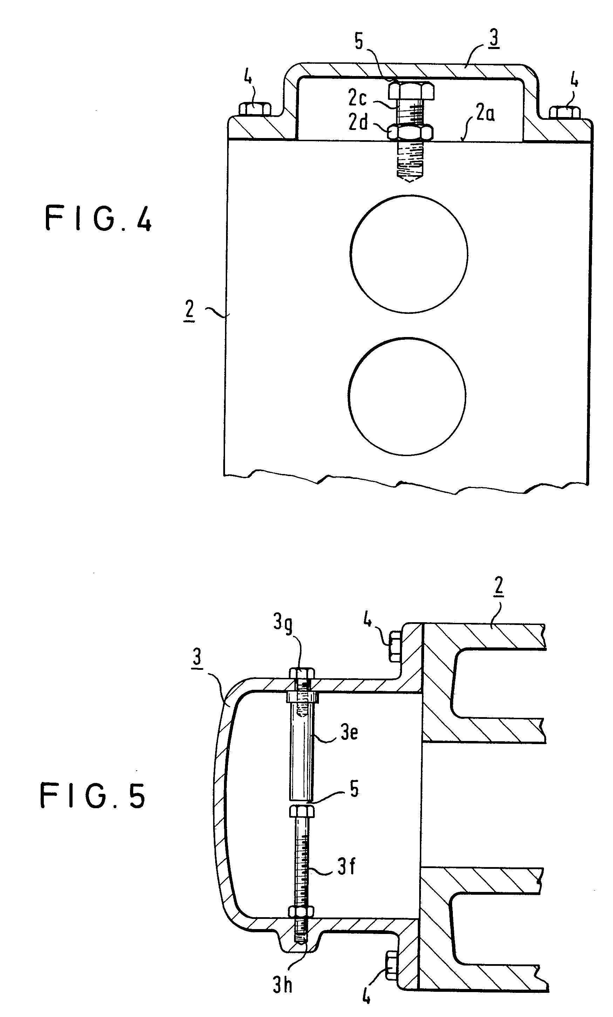

Die Konstruktion nach der Fig. 4 unterscheidet sich von der Anordnung nach Fig. 2 dadurch, daß das Dämpfungselement als Schraube 2c ausgebildet ist, die in ein entsprechendes Gewinde in der Wandung 2a des Motorblocks 2 eingeschraubt ist. Dabei ist der Spalt 5 zwischen der entsprechend bearbeiteten Stirnfläche der Schraube 2c und der Innenwandung des Bauteils 3 gebildet.

Durch entsprechendes Verstellen der Schraube 2c ist die Weite des Spalts 5 einstellbar. Die jeweilige Lage der Schraube 2c wird durch eine Gegenmutter 2d gesichert.

Bei der Konstruktion nach der Fig. 5 sind die Dämpfungselemente 3e und 3f anders ausgebildet als bei der Anordnung nach der Fig. 3. Das Dämpfungselement 3e besteht danach aus einem Stab oder einer Leiste, die mittels einer Schraube 3g mit dem diesbezüglichen Wandungsteil des Bauteils 3 verschraubt ist.

Demgegenüber besteht das Dämpfungselement 3f aus einer Schraube oder Spindel, die in eine Sackbohrung 3h in dem diesbezüglichen Wandungsteil des Bauteils 3 eingeschraubt ist. Durch Längsverstellung des Dämpfungselements 3f läßt sich entsprechend die Weite des Spalts 5 einstellen.

**Patentansprüche**

1. Maschinengehäuse mit einem Bauteil, das einen mindestens eine geringe Menge Flüssigkeit enthaltenden Raum zumindest teilweise umschließt, eine relativ geringe Wandstärke besitzt und in dem auf mechanische, pneumatische und/oder hydraulische Weise Schwingungen erzeugt werden, dadurch gekennzeichnet, daß zwischen gegenüberliegenden Wandungsteilen des Bauteils (3) und/oder einem Wandungsteil desselben und einem gegenüberliegenden Wandungsteil eines benachbarten Gehäuseteils (2) zumindest ein Element (2b; 2c; 3a; 3c, 3d; 3e, 3f) vorgesehen ist, das sich zwischen den betreffenden Wandungsteilen unter Freilassung eines für die Flüssigkeit zugänglichen Spalts (5) erstreckt.

2. Maschinengehäuse nach Anspruch 1, dadurch gekennzeichnet, daß das Element (2b; 2c; 3a) mit einem Wandungsteil verbunden ist und vor dem gegenüberliegenden Wandungssteil unter Bildung des Spalts (5) endet.

3. Maschinengehäuse nach Anspruch 1, dadurch gekennzeichnet, daß zwei zueinander fluchtend angeordnete Elemente (3c, 3d; 3e, 3f) vorgesehen sind, die unter Bildung des Spalts (5) aneinandergrenzen.

4. Maschinengehäuse nach einem der vorhergehenden Ansprüche, dadurch gekennzeichnet, daß zumindest ein Element (2c; 3f) zur Einstellung der Weite des Spalts (5) senkrecht zum Spaltverlauf einstellbar ist.

5. Maschinengehäuse nach Anspruch 4, dadurch gekennzeichnet, daß das Element (2c; 3f) in das Wandungsteil einstellbar eingeschraubt ist.

6. Maschinengehäuse nach einem der vorhergehenden Ansprüche, dadurch gekennzeichnet, daß die Weite des Spalts (5) zwischen ca. 0,02 und 1,0 mm beträgt.

7. Maschinengehäuse nach einem der vorhergehenden Ansprüche, dadurch gekennzeichnet, daß die den Spalt begrenzende Fläche eines Elements ca. 20 mm² im Minimum beträgt.

## Claims

1. A machine housing with a component which surrounds, at least partially, a chamber containing at least a small quantity of fluid, and has a relatively small wallthickness, and in which oscillations are set up in a mechanical, pneumatic and/or hydraulic manner, characterized in that at least one element (2b; 2c; 3a; 3c, 3d; 3e, 3f) is provided between oppositely disposed wall parts of the component (3) and/or between a wall part of the component and an oppositely disposed wall part of an adjacent housing part (2), which element extends between the wall parts concerned but leaves free a gap (5) accessible to the fluid.

2. A machine housing according to Claim 1, characterized in that the element (2b; 2c; 3a) is connected to a wall part and terminates short of the oppositely disposed wall part to form the gap (5).

3. A machine housing according to Claim 1, characterized in that two mutually aligned elements (3c, 3d; 3e, 3f) are provided, which lie adjacent each other to form the gap (5).

4. A machine housing according to any one of the preceding Claims, characterized in that at least one element (2c; 3f) is adjustable for the purpose of adjusting the width of the gap (5).

5. A machine housing according to Claim 4, characterized in that the adjustable element (2c; 3f) is adjustably screwed into the wall part.

6. A machine housing according to any one of the preceding Claims, characterized in that the width of the gap (5) is substantially in the range 0.02 to 1.0 mm.

7. A machine housing according to any one of the preceding Claims, characterized in that the area of one of the elements defining the gap is at least approximately 20 mm².

## Revendications

1. Boîtier pour une machine, comprenant un élément, qui entoure au moins partiellement un espace contenant une faible quantité de liquide, qui présente une paroi d'épaisseur relativement mince, et dans lequel des vibrations sont engendrées d'une manière mécanique, pneumatique et/ou hydraulique, ledit boîtier étant caractérisé en ce qu'entre des parties de paroi opposées de l'élément (3), et/ou entre une partie de paroi de celui-ci et une partie de paroi opposée d'une partie de boîtier adjacente (2), il est prévu au moins une pièce (2b, 2c, 3a, 3c, 3d, 3e, 3f) qui s'étend entre des parties de paroi associées en laissant subsister un interstice (5) accessible au liquide.

2. Boîtier pour une machine suivant la revendication 1, caractérisé en ce que la pièce (2b, 2c, 3a) est liée à une partie de paroi et se termine devant la partie de paroi opposée en formant l'interstice (5).

3. Boîtier pour une machine suivant la revendication 1, caractérisé en ce qu'il est prévu deux pièces alignées entre elles (3c, 3d, 3e, 3f), qui se terminent à proximité l'une de l'autre en formant entre elles l'interstice (5).

4. Boîtier pour une machine suivant l'une des revendications précédents, caractérisé en ce qu'au moins une pièce (2c, 3f), pour permettre un ajustement de la largeur de l'interstice (5), est réglable perpendiculairement à 'étendue de celui-ci.

5. Boîtier pour une machine suivant la revendication 4, caractérisé en ce que la pièce (2c, 3f) est visée de façon réglable dans la partie de paroi associée.

6. Boîtier pour une machine suivant l'une des revendications précédentes, caractérisé en ce que la largeur de l'interstice (5) est comprise entre environ 0,02 et 1,0 mm.

7. Boîtier pour une machine suivant l'une des revendications précédentes, caractérisé en ce que la surface de limitation d'interstice d'une pièce atteint environ 20 mm² au minimum.

# FIG. 1

3

3a

1

5

2a

2

1

4

4

FIG. 2

FIG. 3

FIG.4

FIG.5